(19) Europäisches Patentamt
European Patent Office
Office européen des brevets

(11) Publication number: **0 121 985 B2**

(12) # NEW EUROPEAN PATENT SPECIFICATION

(45) Date of publication of the new patent specification: **26.07.95**

(51) Int. Cl.[6]: **C08G 69/26**

(21) Application number: **84300746.9**

(22) Date of filing: **07.02.84**

The file contains technical information submitted after the application was filed and not included in this specification

(54) **Crystalline copolyamides from terephthalic acid and hexamethylenediamine and trimethylhexamethylenediamine.**

(30) Priority: **16.02.83 US 466903**

(43) Date of publication of application: **17.10.84 Bulletin 84/42**

(45) Publication of the grant of the patent: **24.08.88 Bulletin 88/34**

(45) Mention of the opposition decision: **26.07.95 Bulletin 95/30**

(84) Designated Contracting States: **BE CH DE FR GB IT LI LU NL SE**

(56) References cited:
**FR-A- 2 371 474**
**US-A- 3 294 758**
**US-A- 3 846 379**

**Polymer, Vol. 17 (1976), pages 875-892**

(73) Proprietor: **AMOCO CORPORATION**
**200 East Randolph Drive**
**Chicago**
**Illinois 60601 (US)**

(72) Inventor: **Poppe, Wassily**
**105 North Main Street**
**Lombard**
**Illinois 60148 (US)**
Inventor: **Chen, Yu-Tsai**
**22 W 401 McCarron Road**
**Glen Ellyn**
**Illinois 60137 (US)**
Inventor: **Autry, Larry Wayne**
**4793 Lake Valley Drive**
**Lisle**
**Illinois 60532 (US)**

(74) Representative: **Ritter, Stephen David et al**
**Mathys & Squire**
**100 Grays Inn Road**
**London WC1X 8AL (GB)**

EP 0 121 985 B2

**Description**

BACKGROUND OF THE INVENTION

Field of the Invention

The field of this invention relates to crystalline copolyamides from terephthalic acid and mixtures of hexamethylenediamine and trimethylhexamethylenediamine.

Background

Crystalline copolyamides from terephthalic acid and mixtures of hexamethylenediamine and trimethylhexamethylenediamine have not been obtained by the prior art. In fact, U.S. Patent 3,382,216 teaches that the preparation of polyhexamethylene terephthalamide cannot be effected through melt condensation processes. U.S. Patent 3,150,117 discloses that linear amorphous film forming polyamides can be prepared from dicarboxylic acids and alkyl substituted hexamethylenediamine such as trimethylhexamethylenediamine; hexamethylenediamine is not disclosed in this reference. Other pertinent references include U.S. Patent 3,294,758, which discloses that compositions containing greater than 30 percent hexamethylenediamine are brittle. U.S. Patents 3,825,516, 3,962,400, 3,294,758, 3,846,379 and 4,250,297 disclose amorphous polyamides. In reviewing all these references, it is clear that the crystalline polyterephthalamides manufactured from terephthalic acid and mixtures of hexamethylenediamine and trimethylhexamethylenediamine including filled compositions of these polymers having a heat deflection temperature of 240 to 305 °C are unknown to the prior art.

The general object of this invention is to provide crystalline polyterephthalamides and molding compositions reinforced with glass fibers, glass beads, minerals, graphite fibers or a mixture thereof. We have now found that crystalline polyterephthalamides can be obtained from terephthalic acid (TA) and a mixture of hexamethylenediamine (HMDA) and trimethylhexamethylenediamine (TMHMDA). The mole ratio of HMDA and TMHMDA can vary from 55/45 to 98/2, preferably 60/40 to 95/5. This crystalline polymer, when filled and molded with glass fibers, glass beads, minerals, graphite fibers or a mixture thereof, can display a heat deflection temperature of 240 to 305 °C, as determined by ASTM method, D648. This is an unusual feature and completely unexpected, since amorphous polyterephthalamides have much lower heat deflection temperatures. The importance of having high heat deflection temperatures is that it enables the injection molded polyterephthalamides to be used in applications such as the hood of an automobile, shroud for a lawn mower, chain saw guard, and electrical connector applications. Our molded compositions have good mechanical properties such as tensile strength, flexural properties and impact strength.

The molecular weight of our copolymerides may be 5,000 to 40,000. Our novel composition can be filled with 10 to 60 weight percent glass fibers, glass beads, minerals, graphite fibers, or a mixture thereof. Advantageously, the molding composition may contain from 20 to 50 weight percent of glass fibers, glass beads, mineral fibers, graphite fibers, or a mixture thereof. Our studies have shown that high heat deflection temperatures are obtained and the cost of molding products derived from polyterephthalamides are reduced by substituting for part of the polymer 20 to 50 weight percent thereof with glass fibers, glass beads, minerals, or graphite fibers. Preferred compositions comprise 40 to 60 percent of glass fibers, glass beads, mineral fibers, graphite fibers or mixtures thereof and have a heat deflection temperature in excess of 240 °C and up to about 305 °C. These glass filled polyamides and copolyamides are much more economical than molding compositions prepared without the use of the glass fibers, glass beads, minerals, or graphite fibers. Novel fibers and laminates can also be prepared from the polyamide and copolyamide derived from polyterephthalamide and this is indicated by the execllent physical properties of these polyamides.

Our novel crystalline polyterephthalamides are suitably extruded at a temperature of 300 to 350 °C through a fiber die having a multiplicity of apertures of about 0.06 inch (0,15 mm) diameter each. Fiber strands are suitably taken up at 10 to 1200 meters per minute, preferably at about 500 to 1000 meters per minute. The fibers are suitably taken at a temperature of at least 300 °C, advantageously, in the range of about 320 to 350 °C, preferably, in the temperature range of about 330 to 340 °C to give fibers having a tenacity of about 5 grams per denier and an initial modulus of about 25 grams per denier. The use of polyimides and amides as engineering plastics has been limited only by their relatively high cost. Thus, employing our invention, through which the inherent cost can be brought down, the commercial application of polyamides requiring very high heat deflection temperatures can be greatly expanded. We have prepared monofilaments using our novel polyamide. With monofilament, the process starts with a single screw

extruder to supply a melt for conversion to fiber. The die for monofilament is similar to the multifilament die. The monofilament is a slower operation process, typically 50 to 200 feet/minute (16—66 m/minute). For the melt spinning operations 40 to 80 feet/minute (13—26 m/minute) were used for the monofilament processing. The monofilament, on the other hand, is water quenched with much less melt draw down. The monofilament is subsequently drawn with heated drawing systems. The monofilament drawing is done inline using heated ovens.

TABLE 1
Copolyamide Monofilament

| Sample TA/HMDA/TMHMDA | $T_m$ (C°) | Temp (C°) | Melt Denier (g/9000m) | Elongation (%) |
|---|---|---|---|---|
| 100—50/50 | | | 707 | 25.5 |
| 100—60/40 | 310 | ~330 | 613 | 10.1 |

TABLE 1 (continued)

| Sample TA/HMDA/TMHMDA | Tenacity (g/d) | Initial Modulus (g/d) | Draw Ratio (X:1.0) |
|---|---|---|---|
| 100—50/50 | 3.3 | 46.8 | |
| 100—60/40 | 5.4 | 65.2 | 4.5 |

Suitably, in our process for the manufacture of polyterephthalamides, the reaction temperature is kept in the range of about 260 to 315 °C, HMDA and TMHMDA in the mole ratio of 55/45 to 95/5, preferably in the mole ratio of 60/40 to 90/10, are reacted without the addition of any external solvent. The reactant melt temperature in our process is kept in the range of about 250 to 270 °C. In the preferred process, the reaction is conducted in a Helicone® reactor, preheated to a temperature of about 90 to 150 °C. In our process for the manufacture of polyamides, about equal molar amounts of TA are reacted with a primary aliphatic diamine, such as HMDA and TMHMDA. The molar ratio of TA to the aliphatic primary diamine may be in the range of 1.2:1 to 1:1.2, preferably in the range of 1:1.

Catalysts can suitably be employed in our process. These catalysts include the following compounds: $NaH_2PO_2$, $H_3PO_2$, $H_3PO_4$, $H_2SO_4$, HCl, $Na_3PO_3$, $NaH_2PO_4 \cdot H_2O$. The amount of catalyst present can vary from about 0.01 to about 0.2 weight percent of the total weight of the reactants. The preferred catalyst is sodium hypophosphite.

Our novel injection moldable crystalline polyamide copolymer of HMDA and TMHMDA consists of the following recurring structural units:

A)

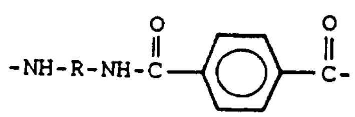

B)

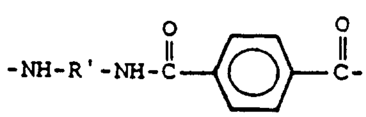

wherein R is a straight chain aliphatic hydrocarbon radical containing 6 carbon atoms and R' is an alkyl substituted saturated hydrocarbon chain, 6 carbon atoms in length in which the alkyl substitution comprises

3 methyl groups with two of the three methyl groups on the same carbon atom. The preferred alkyl substituted diamines for our novel compositions are 2,2,4-trimethylhexamethylene diamine and 2,4,4-trimethylhexamethylene diamine or mixtures of these. Injection molding of our polyterephthalamide, filled or unfilled polymers, is accomplished by injecting the polyamide into a mold maintained at a temperature of about 100 to 200 °C. In this process, a 20 second to 1 minute cycle is used with a barrel temperature of about 300 to 350 °C. These temperatures will vary depending on the glass transition temperature (Tg) and melt temperature (Tm) of the polyamide being molded. The Tg and Tm of our polyterephthalamide are about 120 to 160 °C and 300 to 340 °C, respectively. The polyterephthalamide has excellent thermal and mechanical properties and can readily be molded into useful products or formed into fibers, laminates or coatings. The physical properties of a claimed polyamide are disclosed in Table 3. The Tg of this polyamide is 149 °C and the Tm is about 315—320 °C.

We have found that the polyterephthalamide of this invention is improved by the addition of reinforcing materials; particularly the thermal properties are improved if the polyterephthalamide contains from about 10 to 60 percent by weight glass fibers, glass beads, minerals, graphite fibers, or mixtures thereof. In the preferred range, the polyterephthalamides contain 20 to 50 percent by weight of the glass fibers, glass beads, minerals, graphite fibers, or mixtures thereof. Suitably, the reinforcing materials can be glass fibers, glass beads, glass spheres, or glass fabrics. The glass fibers are made of alkali-free boron-silicate glass or alkali-containing C-glass. The thickness of the fibers is suitably on the average between 3 µm and 30 µm. It is possible to use both long fibers in the range of from 5 to 50 mm and also short fibers with each filament length of 0.05 to 5 mm. In principle, any standard commercial grade fibers, especially glass fibers, may be used. Glass beads ranging from 5 µm to 50 µm in diameter may also be used as a reinforcing material.

The reinforced polyamide polymers may be prepared in various ways. For example, so-called roving, endless glass fiber strands, are coated with the polyamide melt and subsequently granulated. The cut fibers or the glass beads may also be mixed with granulated polyamide and the resulting mixture melted in a conventional extruder, or alternatively the fibers may be directly introduced into the polyamide melt through a suitable inlet in the extruder. Injection molding of the novel glass filled polyamide is achieved by injecting the polyamide into a mold maintained at a temperature of about 100 to 200 °C. In this process, a 40 second cycle is used with a barrel temperature of about 300 to 350 °C. The injection molding conditions are given in Table 2.

TABLE 2

| | |
|---|---|
| Mold Temperature | 100 to 200 °C |
| Injection Pressure | 6,000 to 15,000 psi (41.103 MPa) and held for 10 to 20 seconds |
| Back Pressure | 100 to 1,000 psi (689—6890 kPa) |
| Cycle Time | 20 to 60 seconds |
| Extruder: Nozzle Temperature | 320 to 340 °C |
| Barrels: Front Heated to | 300 to 350 °C |
| Screw: | 20 to 60 revolutions/minute. |

The following example illustrates the preferred embodiment of this invention. It will be understood that the examples are for illustrative purposes only and do not purport to be wholly definitive with respect to the conditions or scope of the invention.

Examples 1—3

In all the examples, the reactants, 1.317 lbs. (0.597 kg) TA, 0.614 lbs. (0.279 kg) HMDA, 0.462 lbs (0.21 kg) TMHMDA, and 0.87 g of sodium hypophosphite, are loaded into a Helicone® reactor that has been heated to 95—150 °C. The temperature control is set at 215 °C. The agitator is set at the maximum, 36 rpm. In the examples given in Table 3, the reactor pressure rose to 105 psi (724 kPa). The melt temperature was 205 °C. The temperature controller settings were gradually increased to 230 °C. The reactor pressure rose to 123 psi (848 kPa). The melt temperature was 220 °C. The temperature control was then increased to 315 °C. The reactor pressure was controlled at 123—125 psi (848—862 kPa) for 16 minutes as melt temperature increased to 260 °C. The reactor pressure was then vented down to 100 psi (689 kPa) over a 17 minute period. The melt temperature increased to 310 °C. The reactor was then vented to atmospheric pressure over a 2 minute period. The melt temperature reached 313 °C. The reaction was then stopped by dumping the resin into water.

The resin had an I.V. of 0.86 dl/g, measured in 60/40 plhenol/tetrachloroethane at a temperature of 30 °C.

The filled molding compositions of this invention are prepared by blending the fillers and polymer and then extrusion compounding on an extruder. The extrusion compounding is carried out with the polymer in the molten state, generally at a temperature ranging from 288 to 355 °C, and preferably from 310 to 343 °C.

Injection molding techniques which are used according to this invention are known to persons of skill in the art and are commonly referred to as reciprocating screw injection molding. In reciprocating screw injection molding, powdered or pelletized polymer is delivered to a hopper and from there fed into the feed port of a barrel, typically cylindrical, which houses a screw adapted for rotation and reciprocal motion within the barrel along the length thereof.

The barrel also has a nozzle end opposite the feed end, and may have a chamber located near the nozzle end. Polymer fed from the hopper into the barrel passes into and through the area between flights of the rotating screw and, during such passage, is plasticated due to heat and the working of the polymer between the interior surface of the barrel and the surfaces between screw flights. Working of the polymer between screw flights and the interior of the barrel compacts the polymer between screw flights. After passing between the screw flights, the compacted, plasticated polymer accumulates in the barrel or in a chamber near the nozzle.

During rotation of the screw, pressure, commonly referred to as "back pressure", is applied to the end of the screw at the feed end of the barrel. An opposing pressure develops due to accumulation of polymer at the nozzle end of the barrel, and when this pressure exceeds the back pressure, the screw is pushed away from the nozzle. When the accumulating polymer fills the chamber or the portion of the barrel vacated by the screw, or in some instances, when the screw reaches a pre-determined positon, pressure, commonly referred to as "injection pressure", is applied to the screw, and the accumulated polymer is forced through the nozzle into a mold, which is commonly heated. In some cases, a booster is used to aid the injection. Typically, a non-return check valve is employed to prevent polymer from flowing back towards the screw. Following injection of the polymer into the mold, the polymer is held therein, the mold is cooled, and the molded part removed.

TABLE 3
Material Properties of Polyamide From 100% TA In Acid Content And HMDA and TMHMDA

| Example Number | Glass Fiber % | Tensile ASTM Method D-638 Strength M psi | Tensile ASTM Method D-638 Elongation % |
|---|---|---|---|
| 100/65/35 TA/HMDA/TMHMDA Polyamide (0.86 I.V.) by mole prepared as shown above | | | |
| 1 | 0 | 13.1 (90.3 kPa) | 5.2 |
| 2 | 45 | 33.6 (232 kPa) | 5.3 |
| 3 | 55 | 34.2 (236 kPa) | 4.9 |

TABLE 3 (continued)

| Example Number | Flexural ASTM D-638 Strength M psi | Flexural ASTM D-638 Modulus MM psi | Notched Izod ASTM D-256 ft-lb/in | (J/m) |
|---|---|---|---|---|
| 1 | 21.3 (147 kPa) | 0.46 (3 kPa) | 0.77 | ( 41) |
| 2 | 49.5 (341 kPa) | 1.82 (12.5 kPa) | 3.17 | (169) |
| 3 | 52.4 (361 kPa) | 2.32 (16 kPa) | 3.88 | (207) |

TABLE 3 (continued)

| Example Number | Tensile Impact ASTM D-256 ft-lb/in$^2$ (KJ/m$^2$) | HDT ASTM D-668 (at 264 psi*) °C | % Water Absorption ASTM D-570 |
|---|---|---|---|
| 1 | 37 ( 78) | | 0.55 |
| 2 | 33 ( 70) | 303 | 0.23 |
| 3 | 88 (186) | >304 | 0.20 |

*(1.8 MPa)

GENERAL PROCEDURE

The salt is prepared as follows: diacid and diamine monomers are charged to a batch reactor, which has a pitched blade turbine and is of suitable temperature and pressure ratings, to provide a homogeneous salt solution. This is typically 425 to 450 °F (218—232 °C) and 450 to 550 psig (3100—3790 kPa). Additional components including water, catalyst, silicone oil, end capping agent, and plasticizer are also introduced in the salt reactor. Water content of the salt can range to 25% by weight. The preferred range is about 13 to 17% by weight.

The salt is metered through a pump and pressure is increased to 1500—5000 psig (10—34 MPa). The resulting prepolymer then passes through a preheat zone where temperature is raised from about 425 to abut 450 °F (218—232 °C) to about 550 to about 625 °F (288—329 °C). The total residence time here is 25 to 50 seconds. The resulting prepolymer is then flashed through a control valve to give an aerosol mist at pressures of 0—400 psig (0—2760 kPa) and the polymer is then passed through a tubular flash reactor. This reactor is designed to provide a high heat flux to the polymer and has a wall temperature of about 650 to about 1000 °F (343—538 °C). Melt temperaturer range is about 500 to about 750 °F (260—399 °C) through the flash reactor. The total residence time in the reactor is about 0.1 to about 20 seconds based on feed rate and pressure. (The inherent viscosity (I.V.) is measured in 60/40 phenol/tetrachloroethane at 30 °C).

Conveniently, the polymer is injected directly on the screws of the twin-screw reactor denoted as ZSK in Examples 4 and 5 to furtgher increase the molecular weight. Examples 4 and 5 were prepared as described in the General Procedure with specific details hereinbelow:

Example 4

| | |
|---|---|
| Monomers: | 65% hexamethylene diammonium terephthalate<br>35% trimethylhexamethylene diammonium terephthalate |
| Water Content:<br>Specific Mass Flow: | 20% (by weight)<br>145 lb/hr-in$^2$ (10.1 kg/hr-m$^2$) |
| Residence time: | Salt reactor 100 minutes<br>Preheat zone 40 seconds<br>Reactor zone 2 seconds (est.) |
| Reactor Wall Temp.:<br>Melt Temp:<br>Salt Feed Temp.:<br>Product I.V.: | 700—765 °F (371—407 °C) Pressure: 70—80 psig (482-551 kPa)<br>635 to 650 °F 335—343 °C)<br>615—645 °F (324—341 °C)<br>(Phenol/TCE) Tube: 0.20 dl/g ZSK: 1.06 dl/g. |

Example 5

| | |
|---|---|
| Monomers: | 60% hexamethylene diammonium terephthalate<br>40% trimethylhexamethylene diammonium terephthalate |
| Water Content:<br>Specific Mass Flow: | 17% (by weight)<br>140 lb/hr-in$^2$ (9.8 kg/hr-m$^2$) |
| Residence time: | Salt reactor 100 minutes<br>Preheat zone 40 seconds<br>Reactor zone 2 seconds (est.) |
| Reactor Wall Temp.:<br>Melt Temp.:<br>Salt Feed Temp.:<br>Product I.V.: | 700 °F (371 °C) Pressure: 90—100 psig (620—689 kPa)<br>640 to 650 °F (338—343 °C)<br>640 to 675 °F (338—357 °C)<br>(Phenol/TCE) Tube: 0.20 dl/g ZSK: 0.83 dl/g. |

**Claims**

**1.** A crystalline polyamide copolymer of terephthalic acid and hexamethylenediamine and trimethylhexamethylenediamine consisting of the following recurring structural units:

A)

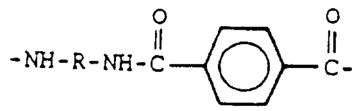

B)

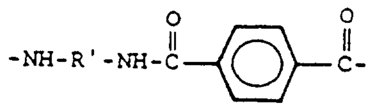

wherein R is a straight chain aliphatic hydrocarbon radical containing 6 carbon atoms and R' is an alkyl substituted saturated hydrocarbon chain 6 carbon atoms in length in which the alkyl substitution comprises 3 methyl groups with two of the three methyl groups on the same carbon atom wherein the mole ratio of A units to B units is 55:45 to 98:2.

2. A copolyamide as claimed in Claim 1 wherein R is hexamethylene and R' is 2,2,4-trimethylhexamethylene, 2,4,4-trimethylhexamethylene or a mixture of both.

3. A copolyamide as claimed in Claim 1 or Claim 2 having a mole ratio of hexamethylene to trimethylhexamethylene moieties of 60:40 to 95:5.

4. An injection molding composition comprising a copolyamide as claimed in any of Claims 1 to 3 and 10 to 60 percent of glass fibers, glass beads, mineral fibers, graphite fibers or a mixture of these and wherein the injection molded composition has heat deflection temperature of 240 to 305 °C.

5. A composition according to Claim 4 which comprises 20 to 50 percent of glass fibers, glass beads, mineral fibers, graphite fibers or a mixture of these.

6. A composition according to Claim 4 which comprises 40 to 60 percent of glass fibers, glass beads, mineral fibers, graphite fibers or a mxiture of these.

**Patentansprüche**

1. Kristallines Polyamidcopolymerisat auf Terephthalsäure und Hexamethylendiamin und Trimethylhexamethylendiamin, **dadurch gekennzeichnet, daß** es aus den folgenden wiederkehrenden Struktureinheiten besteht

A)

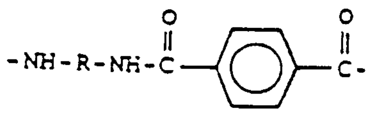

B)

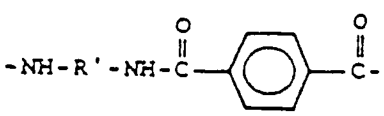

worin R ein geradkettiger aliphatischer Kohlenwasserstoffrest mit 6 Kohlenstoffatomen ist und R' für

eine alkylsubstituierte gesättigte Kohlenwasserstoffkette mit einer Länge von 6 Kohlenstoffatomen steht, bei welcher die Alkylsubstituenten aus drei Methylgruppen bestehen, wobei zwei dieser drei Methylgruppen am gleichen Kohlenstoffatom angeordnet sind und wobei das Molverhältnis der Einheiten A zu den Einheiten B von 55:45 bis 98:2 reicht.

**2.** Copolyamid nach Anspruch 1, **dadurch gekennzeichnet, daß** R Hexamethylen ist und R' für 2,2,4-Trimethylhexamethylen, 2,4,4-Trimethylhexamethylen oder ein Gemisch aus beiden steht.

**3.** Copolyamid nach Anspruch 1 oder 2, **dadurch gekennzeichnet, daß** es ein Molverhältnis von Hexamethylenresten zu Trimethylhexamethylenresten von 60:40 bis 95:5 aufweist.

**4.** Spritzgießmasse, **dadurch gekennzeichnet, daß** sie ein Copolyamid nach irgendeinem der Ansprüche 1 bis 3 und 10 bis 60 % Glasfasern, Glasperlen, Mineralfasern, Graphitfasern oder eines Gemisches hiervon enthält, wobei die spritzgegossene Masse eine Wärmestandfestigkeitstemperatur von 240 bis 305 °C aufweist.

**5.** Masse nach Anspruch 4, **dadurch gekennzeichnet, daß** sie 20 bis 50 % Glasfasern, Glasperlen, Mineralfasern, Graphitfasern oder eines Gemisches hiervon enthält.

**6.** Masse nach Anspruch 4, **dadurch gekennzeichnet, daß** sie 40 bis 60 % Glasfasern, Glasperlen, Mineralfasern, Graphitfasern oder eines Gemisches hiervon enthält.

## Revendications

**1.** Un copolymère polyamide cristallin formé à partir d'acide téréphtalique et d'hexaméthylènediamine et de triméthylhexaméthylènediamine, constitué par les motifs structuraux répétés suivants :

A)

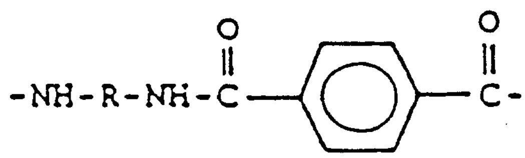

B)

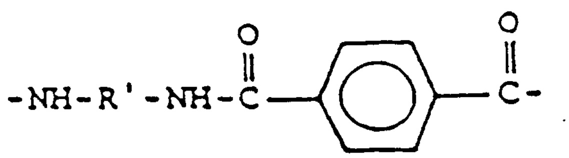

où R est un radical hydrocarboné aliphatique à chaîne droite contenant 6 atomes de carbone et R' est une chaîne hydrocarbonée saturée longue de 6 atomes de carbone alcoyl-substituée dont la substitution alcoyle comprend trois groupes méthyles, avec deux des trois groupes méthyles sur le même atome de carbone, où le rapport molaire des motifs A aux motifs B est de 55/45 à 98/2.

**2.** Un copolyamide comme revendiqué dans la revendication 1, où R est un hexaméthylène et R' est un 2,2,4-triméthylhexaméthylène, un 2,4,4-triméthylhexaméthylène ou un mélange des deux.

**3.** Un copolyamide comme revendiqué dans la revendication 1 ou la revendication 2 ayant un rapport molaire des fragments d'hexaméthylène aux fragments de triméthylhexaméthylène de 60/40 à 95/5.

**4.** Une composition de moulage par injection comprenant un copolyamide comme revendiqué dans l'une quelconque des revendications 1 à 3 et 10 à 60 % en poids de fibres de verre, de perles de verre, de fibres minérales, de fibres de graphite ou d'un mélange de celles-ci et la composition moulée par

injection a une température de déflexion à chaud de 240 à 305 ° C.

5. Une composition selon la revendication 4, qui comprend 20 à 50 % de fibres de verre, de perles de verre, de fibres minérales, de fibres de graphite ou d'un de leurs mélanges.

6. Une composition selon la revendication 4, qui comprend 40 à 60 % de libres de verre, de perles de verre, de fibres minérales, de fibres de graphite ou d'un de leurs mélanges.